# EUROPEAN PATENT APPLICATION

(11) **EP 4 261 365 A1**
(43) Date of publication of application: **18.10.2023**
(21) Application number: 23164106.9
(22) Date of filing: 24.03.2023
(51) Int. Cl.: E05B 15/00, E05B 15/02, E05B 47/00, E05B 59/00

(54) **ENERGY HARVESTING METHODS ON DOOR LOCKS**

(30) Priority: 11.04.2022 US 202263329652 P
(71) Applicant: Carrier Corporation, Palm Beach Gardens, FL 33418 (US)
(72) Inventor: GOPAVARAM, Subhash Reddy, 500081 Hyderabad (IN); LINGALA, Ramesh, 500081 Hyderabad (IN); DUMBALA, Mohan Reddy, 500081 Hyderabad (IN)
(74) Representative: Dehns

(57) **Abstract**

A method of powering a door lock (16) including a deadbolt (410) and a thumb-turn lever (402) mechanically connected to the deadbolt (410) through one or more mechanical linkages including: converting mechanical energy of the deadbolt (410) being moved to electricity using a nanogenerator (634); and providing the electricity to at least one of an energy storage device (510) of the door lock (16) or a controller (24) of the door lock (16), wherein the nanogenerator (634) is located on at least one of the thumb-turn lever (402), the deadbolt (410), or the one or more mechanical linkages.

## Description

The embodiments herein generally relate to door locks and more specifically, to a method and apparatus to using energy generation devices in door locks.

Door locks are typically disconnected from power sources and require frequent battery changes to maintain operation. A solution that requires less battery changes are greatly desired.

According to a first aspect of the invention, a method of powering a door lock including a deadbolt and a thumb-turn lever mechanically connected to the deadbolt through one or more mechanical linkages is provided. The method including: converting mechanical energy of the deadbolt being moved to electricity using a nanogenerator; and providing the electricity to at least one of an energy storage device of the door lock or a controller of the door lock, wherein the nanogenerator is located on at least one of the thumb-turn lever, the deadbolt, or the one or more mechanical linkages.

The nanogenerator may be a piezoelectric nanogenerator.

The nanogenerator may be a triboelectric nanogenerator.

The nanogenerator may be located on the thumb-turn lever.

The nanogenerator may be located on a spindle receiver blind orifice of the thumb-turn lever.

The nanogenerator may be located on the deadbolt.

The one or more mechanical linkages may include a spindle receiver configured to translate the deadbolt as the spindle receiver rotates, wherein the nanogenerator may be located on the spindle receiver.

The one or more mechanical linkages may include a thumb-turn rosette connecting the thumb-turn lever to a spindle receiver configured to translate the deadbolt as the spindle receiver rotates, wherein the nanogenerator may be located on the thumb-turn rosette.

The thumb-turn rosette may include a first spindle located on a first side, the thumb-turn lever being configured to receive the first spindle, wherein the nanogenerator may be located on the first spindle.

The thumb-turn rosette may include a second spindle located on a second side, the spindle receiver being configured to receive the second spindle, wherein the nanogenerator may be located on the second spindle.

According to a second aspect of the invention, a door lock is provided. The door lock including: a deadbolt; a thumb-turn lever mechanically connected to the deadbolt through one or more mechanical linkages; and a nanogenerator configured to convert mechanical energy of the deadbolt being moved to electricity, wherein the nanogenerator is located on at least one of the thumb-turn lever, the deadbolt, or the one or more mechanical linkages.

The nanogenerator may be a piezoelectric nanogenerator.

The nanogenerator may be a triboelectric nanogenerator.

The nanogenerator may be located on the thumb-turn lever.

The nanogenerator may be located on a spindle receiver blind orifice of the thumb-turn lever.

The nanogenerator may be located on the deadbolt.

The one or more mechanical linkages may include a spindle receiver configured to translate the deadbolt as the spindle receiver rotates, wherein the nanogenerator may be located on the spindle receiver.

The one or more mechanical linkages may include a thumb-turn rosette connecting the thumb-turn lever to a spindle receiver configured to translate the deadbolt as the spindle receiver rotates, wherein the nanogenerator may be located on the thumb-turn rosette.

The thumb-turn rosette may include a first spindle located on a first side, the thumb-turn lever being configured to receive the first spindle, wherein the nanogenerator may be located on the first spindle.

The thumb-turn rosette may include a second spindle located on a second side, the spindle receiver being configured to receive the second spindle, wherein the nanogenerator may be located on the second spindle.

Technical effects of embodiments of the present invention include generating electricity from mechanical energy of a deadbolt using nanogenerators located on at least one of the thumb-turn lever, the deadbolt, or the one or more mechanical linkages connecting the thumb-turn lever to the deadbolt.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 is a schematic illustration of an exemplary door lock system;
FIG. 2 is a schematic view of an exemplary door lock, mobile device, and server;
FIG. 3 illustrates a view of an exemplary dead bolt generator for the door lock;
FIG. 4 illustrates a view of an exemplary mechanical linkage generator;
FIG. 5 illustrates a view of an exemplary mechanical linkage generator; and
FIG. 6 is a flow process illustrating an exemplary method of powering a door lock comprising a deadbolt and a thumb-turn lever mechanically connected to the deadbolt through one or more mechanical linkages.

A detailed description of one or more embodiments of the disclosed invention and method are presented herein by way of exemplification and not limitation with reference to the Figures.

Embodiments disclosed herein relate to an apparatus and method for energy harvesting on door locks. Door locks are typically disconnected from power sources and require frequent battery changes to maintain operation. The embodiments disclosed herein seek to charge an energy storage device by harvest mechanical energy on door locks by placing nanogenerators on at least one of a deadbolt, a thumb-turn lever, or mechanical linkages connecting the thumb-turn lever to the deadbolt.

The energy storage devices may be based on Lithium-Ion Batteries and supercapacitors. The energy storage device may be charge by a power generation device, which can collect and convert mechanical energy into electric energy in the surrounding environment. The energy storage device can store the scavenged energy as chemical energy. Energy scavenging function of the devices generation device may be realized by piezoelectric nanogenerators or triboelectric nanogenerators. This generates small amount of energy which will be useful to power lock's LEDs, motor, and buzzer. Nanogenerators convert kinematic energy to electrical energy when we apply pressure on those materials

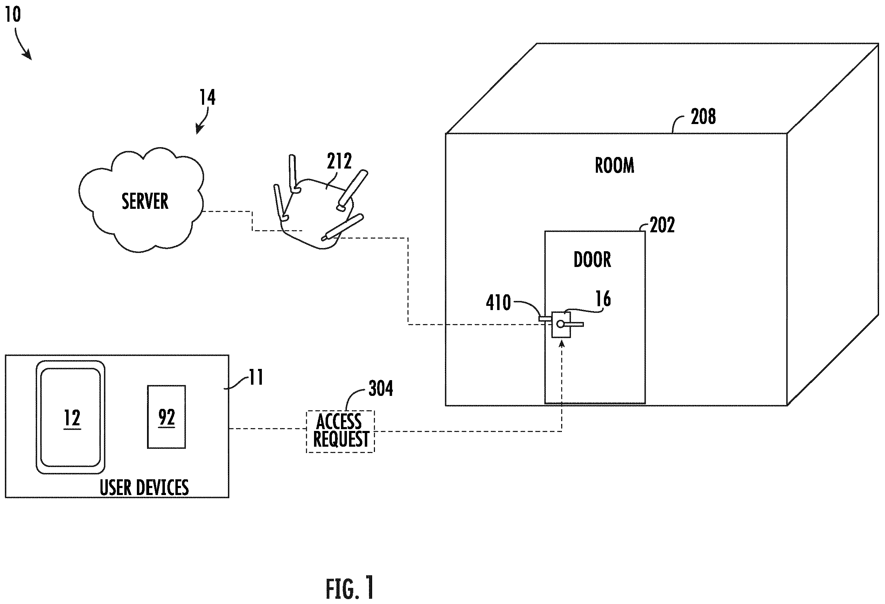

FIG. 1 is schematic view of a door lock system 10, according to an embodiment of the present invention. It should be appreciated that, although particular systems are separately defined in the schematic block diagrams, each or any of the systems may be otherwise combined or separated via hardware and/or software. The door lock system 10 includes a door lock 16 operably connected to a door 202 of a room 208. The door lock 16 is configured to control access through the door 202 to the room 208. The door lock 16 includes a deadbolt 410 configured to be engaged and disengaged to lock and unlock the door 202, respectively. The deadbolt 410 may be engaged and disengaged from inside of the room 208.

For a selected period of stay (e.g., period of time for a person staying at a hotel) the user device 11 belonging to a person may be granted access to one or more door locks 16 (e.g., the door lock on a hotel room assigned to the person). For example, when a person checks into the hotel room their user device 11 will be granted access to a room 208. There may be one or more user devices 11 assigned to a room 208 (e.g., a husband and a wife), thus embodiments disclosed herein may apply to multiple user devices 11 per room 208. A person may utilize their user device 11 to unlock and/or lock the door lock 16 operably connected to their assigned room 208 through an access request 304. The user device 11 may store credentials to unlock and/or lock the door lock 16. Some credentials may be used for multiple door locks 16 if there are multiple door locks 16 for a single assigned room 208 or the person is assigned access to multiple rooms 208. For example, a door lock 16 operably connected to a person's hotel room and a door lock 16 operably connected to a hotel pool may respond to the same credential. Other credentials may be specific to a single door lock 16.

The user device 11 may be a physical key card 92 and/or a mobile device 12. The user device 11 may transmit an access request 304 to the door lock 16 by short-range radio transmission when the user device 11 is placed proximate the door lock 16 or by the user device 11 being inserted into the door lock 16 for the door lock to read the user device (e.g., a magnetic strip on an encoded card 92). The physical key card 92 is capable of being encoded with card data, such as, for example, a magnetic strip or RFID chip. The card data may include credentials to grant access to a specific door lock 16. For example, for a period of stay for the user device 11 may be granted access to a specific door lock 16. The mobile device 12 is a wireless capable handheld device such as a smartphone that is operable to communicate with the server 14 and the door locks 16. The server 14 may provide credentials and other data to the door lock 16, such as firmware or software updates to be communicated to one or more of the door locks 16. Although the server 14 is depicted herein as a single device, it should be appreciated that the server 14 may alternatively be embodied as a multiplicity of systems, from which the mobile device 12 receives credentials and other data.

Each door lock 16 may be a wireless-capable, restricted-access, or restricted-use device such as wireless locks, door lock readers for building entry, and other restricted-use machines. The user device 11 submits credentials to the door locks 16, thereby selectively permitting a user to access or activate functions of the door locks 16. A user may, for example, submit a credential to an electromechanical lock to unlock it, and thereby gain access to a room 208.

The door lock 16 may be wirelessly connected to the wireless access protocol device 212 and communicate wirelessly to the mobile device 12. In a non-limiting embodiment, even if the door lock 16 is wirelessly capable, communication between the mobile device 12 and the door lock 16 may occur through the server 14. For example, the door lock 16 may communicate wirelessly through the wireless access protocol device 212 to the server 14 and then the server 14 may relay the communication wirelessly to the mobile device 12. In a further example, the mobile device 12 may communicate wirelessly to the server 14 and the server 14 may communicate wirelessly through the wireless access protocol device 212 to the door lock 16. The communication between the server 14 and the mobile device 12 may occur through the wireless access protocol device 212 or another wireless network such as, for example, a cellular network. If the door lock 16 is not wirelessly connected to the server 14, the communication may occur between the door lock 16 and the mobile device 12 via short range wireless communication, such as for example Wi-Fi, Bluetooth, zigbee, infrared, or any other short-range wireless communication method known to one of skill in the art. In an embodiment, the short-range wireless communication is Bluetooth. The mobile device 12 may have to be within a selected range of the door lock 16 in order to utilize short-range wireless communication.

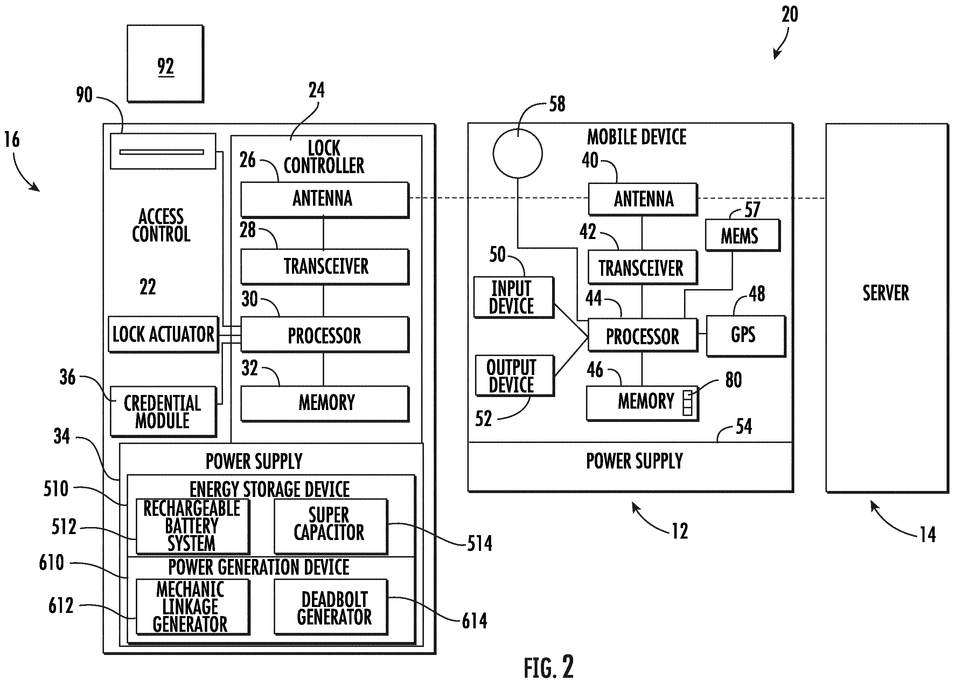

Referring now to FIG. 2 with continued reference to FIG. 1. FIG. 2 shows a block diagram of an example electronic lock system 20 that includes the door lock 16, the mobile device 12, and the server 14. The door lock 16 generally includes a lock actuator 22, a lock controller 24, a lock antenna 26, a lock transceiver 28, a lock processor 30, a lock memory 32, a lock power supply 34, a lock card reader 90 and a credential module 36. The door lock 16 may have essentially two readers, one reader 90 to read a physical key card 92 and the credential module 36 to communicate with the mobile device 12 via the lock processor 30 and the transceiver 28 and antenna 26. Although the present invention focuses primarily on credentials for door lock, it should be appreciated that other systems wherein credentials are transmitted from a mobile device to a door lock so as to identify the user to an online system or validate user access rights or permissions in an offline system will benefit herefrom. Such systems include hotel door lock systems. Upon receiving and authenticating an appropriate credential from the mobile device 12 using the credential module 36, or after receiving card data from lock card reader 90, the lock controller 24 commands the lock actuator 22 to lock or unlock a mechanical or electronic lock. The lock controller 24 and the lock actuator 22 may be parts of a single electronic or electromechanical lock unit, or may be components sold or installed separately.

The lock transceiver 28 is capable of transmitting and receiving data to and from at least the mobile device 12. The lock transceiver 28 may, for instance, be a near field communication (NFC), Bluetooth, infrared, zigbee, or Wi-Fi transceiver, or another appropriate wireless transceiver. The lock antenna 26 is any antenna appropriate to the lock transceiver 28. The lock processor 30 and lock memory 32 are, respectively, data processing, and storage devices. The lock processor 30 may, for instance, be a microprocessor that can process instructions to validate credentials and determine the access rights contained in the credentials or to pass messages from a transceiver to a credential module 36 and to receive a response indication back from the credential module 36. The lock memory 32 may be RAM, EEPROM, or other storage medium where the lock processor 30 can read and write data including but not limited to lock configuration options.

The lock power supply 34 is a power source such as an energy storage device 510 that powers the lock controller 24. The lock power supply includes an energy storage device 510 configured to store electricity and a power generation device 610 configured to generate electricity. The energy storage device 510 may include a rechargeable battery system 512, a super capacitor 514, and/or any other electricity storage system known to one of skill in the art. The rechargeable battery system 512 may comprise, chemical batteries, lithium-ion batteries, solid state batteries, flow batteries, or any other type of battery known to one of skill in the art. The rechargeable battery system 512 may employ multiple batteries organized into battery banks. The super capacitor 514 may be an electrolytic capacitor, a mica capacitor, a paper capacitor a film capacitor, a non-polarized capacitor, a ceramic capacitor, or any type of capacitor known to one of skill in the art.

The lock power supply 34 may include one or more power generation devices 610. The power generation devices 610 may be energy scavenging devices configured to generate energy through various movements of the deadbolt 410, such as engaging and disengaging the deadbolt 410. The power generation device 610 may include a mechanical linkage generator 612 and/or a deadbolt generator 614, discussed further herein. The one or more power generation devices 610 are configured to generate electricity and provide the electricity to the energy storage device 510 and/or directly to the lock controller 24.

In one embodiment, for an initial opening of the lock 16, the lock 16 may rely on the energy storage device 510 to power the initial opening and then after a certain number of open operations, the lock 16 may use energy generated by the power generation device 610.

While FIG. 2 shows the lock antenna 26 and the transceiver 28 connected to the processor 30, this is not to limit other embodiments that may have additional antenna 26 and transceiver 28 connected to the credential module 36 directly. The credential module 36 may contain a transceiver 28 and antenna 26 as part of the credential module. Or the credential module 36 may have a transceiver 28 and antenna 26 separately from the processor 30 which also has a separate transceiver 28 and antenna 26 of the same type or different. In some embodiments, the processor 30 may route communication received via transceiver 28 to the credential module 36. In other embodiments the credential module may communicate directly to the mobile device 12 through the transceiver 28.

The mobile device 12 generally includes a key antenna 40, a key transceiver 42, a key processor 44, a key memory 46, a GPS receiver 48, an input device 50, an output device 52, a key power supply 54, and a Microelectromechanical system (MEMS) 57. The key transceiver 42 is a transceiver of a type corresponding to the lock transceiver 28, and the key antenna 40 is a corresponding antenna. In some embodiments, the key transceiver 42 and the key antenna 40 may also be used to communicate with the server 14. In other embodiments, one or more separate transceivers and antennas may be included to communicate with server 14. The key memory 46 is of a type to store a plurality of credentials locally on the mobile device 12. The mobile device 12 may also include a mobile device application 80. Embodiments disclosed herein, may operate through the mobile device application 80 installed on the mobile device 12. The mobile device 12 may also include a microphone 58 configured to receive audible commands from a person. The MEMS sensor 57 may be a sensor such as, for example, an accelerometer, a gyroscope, or a similar sensor known to one of skill in the art.

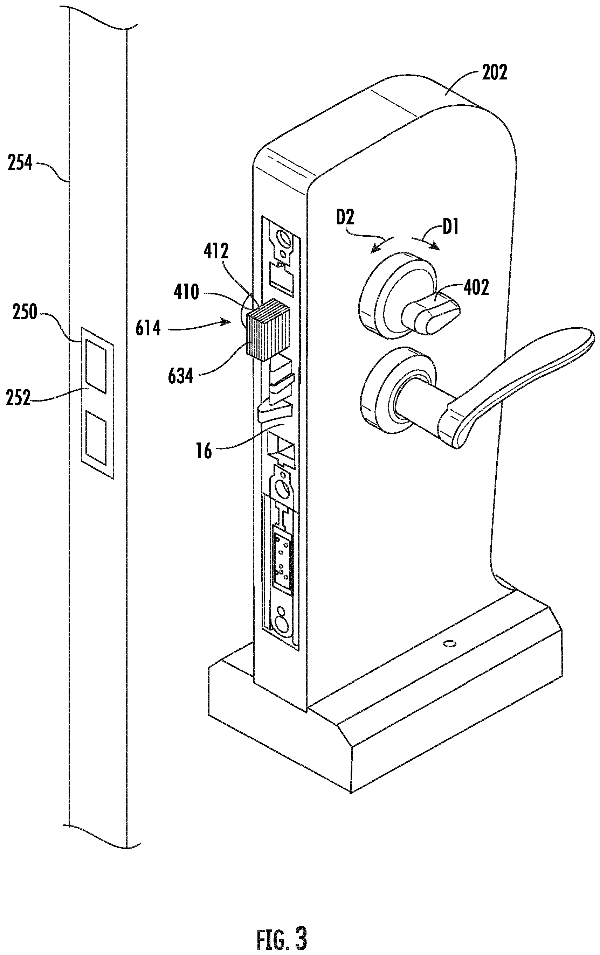

Referring now to FIG. 3, with continued reference to FIGS. 1-2, a schematic illustration of the door lock 16 is illustrated, according to an embodiment of the present invention.

The door lock 16 includes a thumb-turn lever 402 configured to engage and disengage the deadbolt 410. An individual may rotate the thumb-turn lever 402 in a first rotational direction D1 to engage the deadbolt 410 and a second rotational direction D2 to disengage the deadbolt 410.

The deadbolt 410 is configured to be inserted into an orifice 252 of a strike plate 250 when the thumb-turn lever 402 is rotated to engage the deadbolt 410. The deadbolt 410 being located within the orifice 252 of the strike plate 250 secures the door 202 in a locked position. The strike plate 250 is located in a wall 254 that surrounds the door 202.

The deadbolt 410 is configured to be removed from the orifice 252 of the strike plate 250 when the thumb-turn lever 402 is rotated to disengage the deadbolt 410. The deadbolt 410 being removed from the orifice 252 of the strike plate 250 unlocks the door 202.

As the deadbolt 410 moves into and out of the orifice 252 of the strike plate 250, the deadbolt 410 may slide up against the strike plate 250 creating friction and/or pressure between the deadbolt 410 and the strike plate 250.

The deadbolt generator 614 may be located on an outer surface 412 of the deadbolt 410, such that as the deadbolt 410 moves into and out of the orifice 252 of the strike plate 250, the deadbolt generator 614 may slide up against the strike plate 250 creating friction and/or pressure between the deadbolt generator 614 and strike plate 250. The deadbolt generator 614 may be composed of a plurality of nanogenerators 634 configured to generate electricity from the friction and/or pressure between the deadbolt generator 614 and strike plate 250. The nanogenerators 634 may include, but are not limited to, piezoelectric nanogenerators or triboelectric nanogenerators. The nanogenerators 634 are configured to convert the mechanical energy of the deadbolt 410 sliding in and out of the strike plate 250 into electricity.

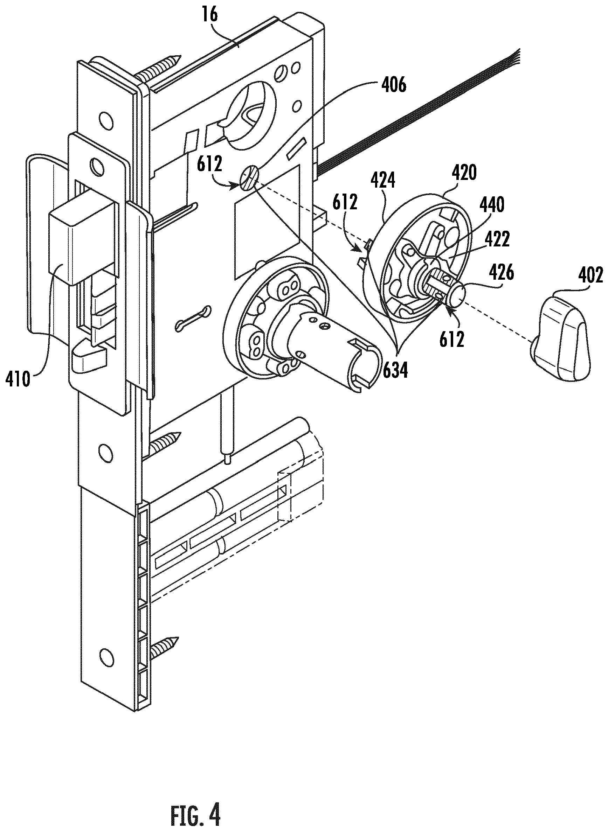

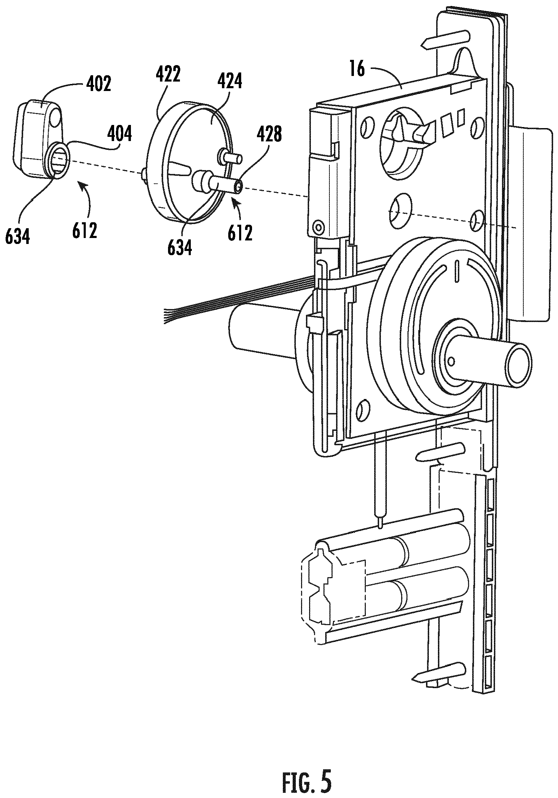

Referring now to FIGS. 4 and 5, with continued reference to FIGS. 1-3, a schematic illustration of the door lock 16 is illustrated, according to an embodiment of the present invention.

As aforementioned, the door lock 16 includes a thumb-turn lever 402 configured to engage and disengage the deadbolt 410. The thumb-turn lever 402 is mechanically connected to the deadbolt 410 through a series of mechanical linkages, such that, as the individual rotates the thumb-turn lever 402 in a first rotational direction D 1 the deadbolt 410 engages and as the individual rotates the thumb-turn lever 402 in a second rotational direction D2 the deadbolt 410 disengages. A power generation device 610 may be located on one or more of the mechanical linkages mechanically connecting the thumb-turn lever 402 to the deadbolt 410 and/or on the thumb-turn lever 402 itself

The series of mechanical linkages may include a thumb-turn rosette 420. The thumb-turn rosette 420 mechanically connects the thumb-turn lever 402 to a spindle receiver 406. The spindle receiver 406 is mechanically connected to the deadbolt 410 and the deadbolt 410 is configured to translate to engage and disengage as the spindle receiver 406 is rotated.

The thumb-turn rosette 420 includes a first side 422 and a second side 424 located opposite the first side 422. The thumb-turn rosette 420 includes a first spindle 426 extending away from the first side 422 and a second spindle 428 extending away from the second side 424. The thumb-turn lever 402 includes a spindle receiver blind orifice 404 configured to receive the first spindle 426. The spindle receiver blind orifice 404 may also be configured to interlock with the first spindle 426.

The second spindle 428 is rotationally linked to the first spindle 426 such that when the first spindle 426 is rotated that second spindle 428 also rotates. Thus, when the thumb-turn lever 402 is rotated, the first spindle 426 and second spindle 428 are rotated, as well. The spindle receiver 406 is configured to receive the second spindle 428. The spindle receiver 406 may be configured to interlock with the second spindle 428. The spindle receiver 406 is configured to be rotated by the second spindle 428.

The mechanical linkage generator 612 may be located on the thumb-turn rosette 420, the first spindle 426, the second spindle 428, the receiver blind orifice 404, and/or the spindle receiver 406, such that as the thumb-turn lever 402 is rotated to engage or disengage the deadbolt 410, the friction and pressure experienced by the mechanical linkages between the thumb-turn lever 402 and the deadbolt 410 turned into electricity. The friction and pressure experienced by the mechanical linkages between the thumb-turn lever 402 and the deadbolt 410 may be friction and pressure with other mechanical linkages between the thumb-turn lever 402 and the deadbolt 410. Additionally, the friction and pressure experienced by the mechanical linkages between the thumb-turn lever 402 and the deadbolt 410 may be friction and pressure with other components surrounding the mechanical linkages between the thumb-turn lever 402 and the deadbolt 410. The mechanical linkages between the thumb-turn lever 402 and the deadbolt 410 may include, but are not limited to the thumb-turn rosette 420, the first spindle 426, the second spindle 428, the receiver blind orifice 404, and/or the spindle receiver 406.

Additionally, the mechanical linkage generator 612 may be located on dead bolt sliding surface 440 located on the first side 422 of the thumb-turn rosette 420. The thumb-turn slide surface 440 is located beneath or opposite the thumb-turn lever 402, such that when the thumb-turn level 402 is rotated, the thumb-turn level 402 slides up against this thumb-turn slide surface 440 where the mechanical linkage generator 612 is located to generate electricity from the friction and/or pressure, as aforementioned.

The mechanical linkage generator 612 may be composed of a plurality of nanogenerators 634 configured to generate electricity from the friction and/or pressure, as aforementioned. The nanogenerators 634 may include, but are not limited to, piezoelectric nanogenerators or triboelectric nanogenerators. The nanogenerators 634 are configured to convert the mechanical energy of the movement of the mechanical linkages into electricity.

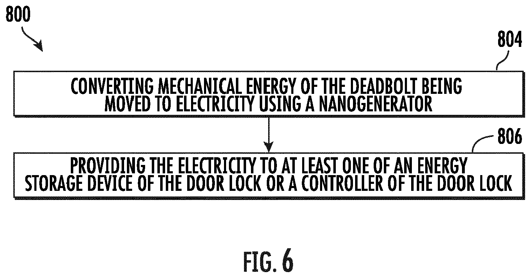

Referring to FIG. 6, within continued references to FIGS. 1-3, a flow diagram illustrating a method 800 of powering a door lock 16 comprising a deadbolt 410 and a thumb-turn lever 402 mechanically connected to the deadbolt 410 through one or more mechanical linkages is illustrated, in accordance with an embodiment of the present invention.

At block 804, mechanical energy of the deadbolt 410 being moved is converted to electricity using a nanogenerator 634. In one embodiment, the nanogenerator 634 is a piezoelectric nanogenerator 634. In another embodiment, the nanogenerator 634 is a triboelectric nanogenerator 634.

At block 806, electricity is provided to at least one of an energy storage device 510 of the door lock 16 or a controller 24 of the door lock 16.

The nanogenerator 634 is located on at least one of the thumb-turn lever 402, the deadbolt 410, or the one or more mechanical linkages. The nanogenerator 634 may be located on the thumb-turn lever 402. The nanogenerator 634 may be located on a spindle receiver blind orifice 404 of the thumb-turn lever 402. The nanogenerator 634 may be located on the deadbolt 410. The one or more mechanical linkages may include a spindle receiver 406 configured to translate the deadbolt 410 as the spindle receiver 406 rotates and the nanogenerator 634 is located on the spindle receiver 406.

The one or more mechanical linkages may include a thumb-turn rosette 420 connecting the thumb-turn lever 402 to a spindle receiver configured to translate the deadbolt 410 as the spindle receiver 406 rotates and the nanogenerator 634 is located on the thumb-turn rosette 420. The thumb-turn rosette 420 may include a first spindle located on a first side 422. The thumb-turn lever 402 being configured to receive the first spindle 426 and the nanogenerator 634 may be located on the first spindle 426.

The thumb-turn rosette 420 may include a second spindle 428 located on a second side 424. The spindle receiver 406 being configured to receive the second spindle 428 and the nanogenerator 634 may be located on the second spindle 428.

While the above description has described the flow process of FIG. 6 in a particular order, it should be appreciated that unless otherwise specifically required in the attached claims that the ordering of the steps may be varied.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the scope thereof. Therefore, it is intended that the present invention not be limited to the particular embodiment disclosed as the best mode contemplated for carrying out this present invention, but that the present invention will include all embodiments falling within the scope of the claims.

## Claims

1. A method of powering a door lock (16) comprising a deadbolt (410) and a thumb-turn lever (402) mechanically connected to the deadbolt (410) through one or more mechanical linkages, the method comprising:
converting mechanical energy of the deadbolt (410) being moved to electricity using a nanogenerator (634); and
providing the electricity to at least one of an energy storage device (510) of the door lock (16) or a controller (24) of the door lock (16),
wherein the nanogenerator (634) is located on at least one of the thumb-turn lever (402), the deadbolt (410), or the one or more mechanical linkages.

2. The method of claim 1, wherein the nanogenerator (634) is a piezoelectric nanogenerator;
or wherein the nanogenerator (634) is a triboelectric nanogenerator.

3. The method of any preceding claim, wherein the nanogenerator (634) is located on the thumb-turn lever (634);
optionally wherein the nanogenerator (634) is located on a spindle receiver blind orifice (404) of the thumb-turn lever (402).

4. The method of any preceding claim, wherein the nanogenerator (634) is located on the deadbolt (410).

5. The method of any preceding claim, wherein the one or more mechanical linkages include a spindle receiver (4060 configured to translate the deadbolt (410) as the spindle receiver (406) rotates, wherein the nanogenerator (634) is located on the spindle receiver (406).

6. The method of any preceding claim, wherein the one or more mechanical linkages include a thumb-turn rosette (420) connecting the thumb-turn lever (402) to a spindle receiver (406) configured to translate the deadbolt (410) as the spindle receiver (406) rotates, wherein the nanogenerator (634) is located on the thumb-turn rosette (420).

7. The method of claim 6, wherein the thumb-turn rosette (420) includes a first spindle (426) located on a first side (422), the thumb-turn lever (402) being configured to receive the first spindle (426), wherein the nanogenerator (634) is located on the first spindle (426).

8. The method of any of claims 6 or 7, wherein the thumb-turn rosette (420) includes a second spindle (428) located on a second side (424), the spindle receiver (406) being configured to receive the second spindle (428), wherein the nanogenerator (634) is located on the second spindle (428).

9. A door lock (16), comprising:
a deadbolt (410);
a thumb-turn lever (402) mechanically connected to the deadbolt (410) through one or more mechanical linkages; and
a nanogenerator (634) located configured to convert mechanical energy of the deadbolt (410) being moved to electricity,
wherein the nanogenerator (634) is located on at least one of the thumb-turn lever (402), the deadbolt (410), or the one or more mechanical linkages.

10. The door lock (16) of claim 9, wherein the nanogenerator (634) is a piezoelectric nanogenerator;
or wherein the nanogenerator (634) is a triboelectric nanogenerator.

11. The door lock (16) of any of claims 9 or 10, wherein the nanogenerator (634) is located on the thumb-turn lever (402);
optionally wherein the nanogenerator (634) is located on a spindle receiver blind orifice (404) of the thumb-turn lever (402).

12. The door lock (16) of any of claims 9 to 11, wherein the nanogenerator (634) is located on the deadbolt (410).

13. The door lock (16) of any of claims 9 to 12, wherein the one or more mechanical linkages include a spindle receiver (406) configured to translate the deadbolt (410) as the spindle receiver (406) rotates, wherein the nanogenerator (634) is located on the spindle receiver (406).

14. The door lock (16) of any of claims 9 to 13, wherein the one or more mechanical linkages include a thumb-turn rosette (420) connecting the thumb-turn lever (402) to a spindle receiver (406) configured to translate the deadbolt (410) as the spindle receiver (406) rotates, wherein the nanogenerator (634) is located on the thumb-turn rosette (420).

15. The door lock (16) of claim 14, wherein the thumb-turn rosette (420) includes a first spindle (426) located on a first side (422), the thumb-turn lever (402) being configured to receive the first spindle (426), wherein the nanogenerator (634) is located on the first spindle (426);
and/or wherein the thumb-turn rosette (420) includes a second spindle (428) located on a second side (424), the spindle receiver (406) being configured to receive the second spindle (428), wherein the nanogenerator (634) is located on the second spindle (428).
